# DEMANDE DE BREVET EUROPEEN

(11) **EP 1 594 234 A1**
(43) Date de publication de la demande: **09.11.2005**
(21) Numéro de dépôt: 05290208.7
(22) Date de dépôt: 31.01.2005
(51) Int. Cl.: H04B 3/54

(54) **Circuit de couplage pour communications par ligne électrique**

(30) Priorité: 28.04.2004 FR 0404521
(71) Demandeur: Electricité de France, 75008 Paris (FR)
(72) Inventeur: Issa, Fawzi, 92310 Sèvres (FR); Chaffanjon, Daniel, 93230 Montgeron (FR)
(74) Mandataire: Hassine, Albert

(57) **Abrégé**

L'invention concerne un équipement d'interconnexion entre un modem (2) et un câble d'alimentation (CA) connecté à un réseau de distribution électrique (1), notamment pour de la communication par courants porteurs en ligne (SIG). L'équipement de l'invention (3) comporte un tore magnétique (TM) pour assurer un couplage entre le modem (2) et le câble d'alimentation (CA), ainsi qu'une boucle passive (BP) reliée au câble (CA), traversant le tore magnétique (TM) et comportant une paire de capacités (C1,C2) de part et d'autre du tore (TM), pour agir en tant que diviseur capacitif.

## Description

La présente invention concerne la communication par courants porteurs en ligne, notamment à hauts débits.

La technique des courants porteurs en ligne vise à supporter des débits suffisamment élevés (par exemple 2 à 3 Mbits/s) pour permettre d'accéder à haute vitesse, typiquement au réseau Internet. Le réseau électrique devient donc un moyen de télécommunication. Cette technique permet d'utiliser les courants porteurs des lignes de distribution d'énergie comme support de transmission de la voix (notamment de la voix sur IP) ou des données (notamment pour une communication via Internet).

Plus précisément, la technique des courants porteurs à hauts débits consiste à superposer à l'onde de puissance de 50 Hz un signal de faible puissance, typiquement dans la bande 1 à 30 MHz. Actuellement, cette technique est mise en oeuvre sur les réseaux électriques de distribution de haute tension (HTA) et/ou de basse tension (BT).

Comme indiqué ci avant, les applications visées peuvent concerner de l'Internet à haut débit ou encore de la voix sur IP. On indique aussi que les courants porteurs en ligne peuvent être aussi utilisés pour des applications de relevés à distance (ou "*télérelève*"), en exploitant la bande de fréquences de 3 à 148,5 kHz. En outre, les courants porteurs en ligne peuvent être utilisés pour effectuer des chargements tarifaires, dans l'application de distribution de puissances, en exploitant préférentiellement la fréquence à 175 Hz.

On indique que l'invention proposée ici exploite, de préférence, plutôt la bande de 1 à 30 MHz, pour les applications associées à cette bande de fréquences (voix sur IP, communications via Internet, etc).

Par ailleurs, on indique que les réseaux électriques considérés ici sont les réseaux électriques de distribution de haute tension HTA. Typiquement, ces réseaux de distribution présentent des niveaux de tension de 10 kV, 13,5 kV, 15 kV ou encore 20 kV.

La transmission des signaux par courants porteurs en ligne sur des réseaux électriques de haute tension HTA se fait en utilisant des modems dédiés, capables d'échanger des signaux via le réseau de distribution. En particulier, de tels modems dits *"CPL"* (pour *"Courants Porteurs en Ligne*"), délivrent des signaux dans la bande de fréquences de 1 à 30 MHz. On comprendra que ces modems ne peuvent être connectés directement sur le réseau électrique HTA, en raison des niveaux de tension particulièrement différents. En effet, tous les modems CPL utilisent comme tension d'alimentation 230 volts. Ainsi, dans cette application, on a cherché à intercaler entre le modem CPL et le réseau électrique HTA, un coupleur qui obéirait à ces contraintes.

Plus particulièrement, ce couplage doit présenter de bonnes propriétés dans la bande de fréquences de 1 à 30 MHz et doit aussi supporter les niveaux de haute tension du réseau HTA.

Deux solutions se sont actuellement présentées : elles concernent respectivement le couplage capacitif, d'une part, et le couplage inductif, d'autre part.

Le couplage capacitif consiste en un "*piquage*" direct sur une tête de câble d'alimentation HTA. Toutefois, une perturbation des lignes de champ électrique pourrait altérer le fonctionnement d'une cellule HTA en aval du réseau de distribution. Cette solution est, pour l'instant, proscrite en France.

En conséquence, seul le couplage de type inductif est actuellement envisageable. Une solution a priori simple consisterait à disposer un tore magnétique autour de la tête du câble d'alimentation HTA. Toutefois, cette solution s'est avérée particulièrement coûteuse. En effet, la contrainte de la tension et/ou de la dimension radiale du câble d'alimentation HTA s'est posée pour appliquer un tore magnétique autour du câble.

La présente invention vient améliorer la situation.

Elle propose à cet effet un équipement destiné à une interconnexion entre un modem et un câble d'alimentation connecté à un réseau de distribution électrique, notamment pour de la communication par courants porteurs en ligne.

L'équipement comporte un tore magnétique pour assurer un couplage entre le modem et le câble d'alimentation.

Selon l'invention, l'équipement comporte en outre une boucle passive reliée au câble et traversant le tore magnétique.

Ainsi, la présente invention propose de déporter le tore magnétique dans un équipement séparé, prévu spécialement à cet effet. Cet équipement est connecté au câble d'alimentation et comporte alors une boucle passive qui traverse le tore magnétique.

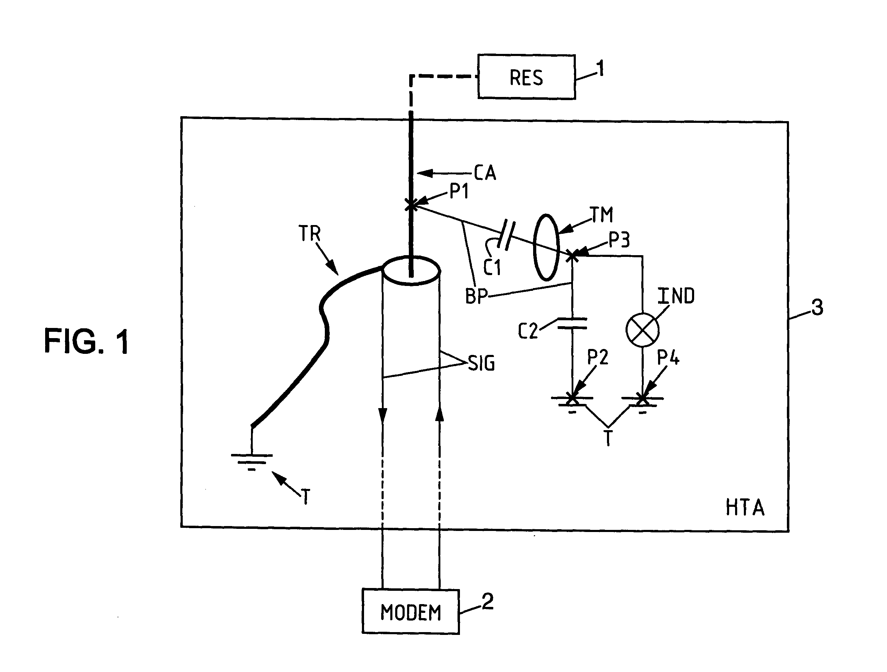

D'autres caractéristiques et avantages de l'invention apparaîtront à l'examen de la description détaillée ci-après, et du dessin annexé sur lequel la figure unique représente un équipement d'interconnexion au sens de la présente invention.

En se référant à la figure unique, l'équipement d'interconnexion au sens de l'invention, portant la référence 3, est interposé entre le réseau de distribution haute tension 1 et un modem 2 pour une communication par courants porteurs en ligne. Plus particulièrement, l'équipement 3 est connecté à un câble CA d'alimentation HTA, de type unipolaire dans l'exemple décrit, relié au réseau de distribution 1, d'une part, et au modem 2, d'autre part. Ce câble assure la distribution de puissance d'alimentation et véhicule par ce fait les signaux de communication SIG par courants porteurs en ligne, du réseau 1 vers le modem 2 et, inversement, du modem 2 vers le réseau 1.

L'équipement 3 comporte un tore magnétique TM pour assurer un couplage entre le modem 2 et le câble d'alimentation CA.

L'équipement 3 au sens de l'invention comporte en particulier une boucle passive BP reliée au câble CA et traversant le tore magnétique TM. Préférentiellement, la boucle passive BP est reliée, d'une part, au câble d'alimentation CA (au point P1) et, d'autre part, à la masse T (au point P2).

La boucle passive BP comporte une première capacité C1 et une seconde capacité C2, agencées de part et d'autre du tore magnétique TM. Ainsi, l'équipement au sens de l'invention agit avantageusement en tant que diviseur capacitif.

Plus particulièrement, la première capacité C1 est reliée au câble d'alimentation CA au point P1, tandis que la seconde capacité C2 est reliée à la masse T au point P2. Ainsi, le tore magnétique TM entoure la boucle passive BP entre la première capacité C1 et la seconde capacité C2. En se référant à la figure unique, le tore magnétique TM entoure la boucle BP plus précisément entre la première capacité C1 et un point P3 de jonction d'un témoin IND, indicateur de la présence de tension et qui est décrit ci-après.

Avantageusement, l'équipement d'interconnexion 3 comporte en outre un témoin indicatif IND, préférentiellement mis en parallèle avec la boucle passive.

Plus précisément, le témoin indicatif IND est mis en parallèle avec la seconde capacité C2, de sorte que le témoin IND est connecté, d'une part, entre le tore magnétique TM et la seconde capacité C2 (au point P3) et, d'autre part, à la masse T (au point P4).

De préférence, le témoin indicatif IND est un témoin lumineux, tel qu'une diode électroluminescente, une lampe, ou autre.

Préférentiellement, le câble d'alimentation CA est coaxial au moins entre sa connexion à la boucle passive BP (à partir du point P1) et sa connexion au modem 2. En outre, le câble d'alimentation CA est, de préférence, entouré par une tresse TR qui est reliée à la terre T au moins entre sa connexion à la boucle passive BP (à partir du point P1) et sa connexion au modem 2.

Avantageusement, cet équipement 3 est destiné à être intégré au sein d'une cellule de haute tension d'alimentation, référencée HTA sur la figure unique, préférentiellement dans un même boîtier. Plus précisément, les capacités C1 et C2 et le câble CA sont disposés préférentiellement dans ce boîtier de la cellule HTA, tandis que le témoin IND est avantageusement situé sur une façade (non représentée) du boîtier et affleure sur une paroi externe de cette façade.

Ainsi, l'invention permet avantageusement un couplage physique d'un appareil de transmission par courants porteurs en ligne, tel qu'un modem 2, à un câble d'alimentation CA, et ce, au sein d'un équipement 3 dans lequel aboutit le câble d'alimentation CA. Cet équipement fait partie d'un ensemble préfabriqué, telle qu'une cellule HTA, qui inclut généralement plusieurs interrupteurs de haute tension d'alimentation. Cet équipement comprend également des moyens, tels que l'indicatif lumineux IND, permettant de savoir si les conducteurs sont sous tension ou hors tension. L'équipement au sens de l'invention, agissant en tant que diviseur capacitif, prélève ainsi une faible part de la haute tension et l'applique à l'indicateur lumineux IND.

On indique que l'équipement au sens de l'invention utilise un appareillage relativement simple, tel qu'un tore magnétique réalisant un couplage inductif en courants faibles, et réalisant globalement un couplage CPL/HTA, à un coût particulièrement bas.

Bien entendu, la présente invention s'applique à la plupart des installations existantes, indépendamment des types de câbles rencontrés. On indique d'ailleurs que pour des câbles tripolaires à papier huilé, les coupleurs inductifs disposés autour de la tête de câble impliqueraient un prix de fabrication pratiquement prohibitif. Ainsi, pour une telle application, l'utilisation d'un équipement en tant que diviseur capacitif, au sens de l'invention, serait particulièrement avantageuse.

Toutefois, on décrit ci-après une utilisation préférée de l'équipement au sens de la présente invention.

L'équipement 3 est prévu à l'interconnexion entre :
- un modem 2, de type CPL, opérant typiquement à une tension voisine de 230V,
- et un câble d'alimentation CA, connecté à un réseau de distribution électrique de haute tension 1, cette tension étant sensiblement comprise entre 10kV et 20kV.

L'équipement 3 est, dans ce contexte, prévu pour de la communication par courants porteurs en ligne, avec une onde de puissance à une fréquence voisine de 50Hz, et des surmodulations à des fréquences sensiblement comprises entre 1 et 30 MHz pour une communication à hauts débits.

On comprendra alors que l'utilisation de l'équipement d'interconnexion est particulièrement avantageuse dans ce contexte. A ce titre, la présente invention vise aussi une telle utilisation.

## Revendications

1. Équipement destiné à une interconnexion entre un modem et un câble d'alimentation connecté à un réseau de distribution électrique, notamment pour de la communication par courants porteurs en ligne, l'équipement comportant un tore magnétique pour assurer un couplage entre le modem et le câble d'alimentation,
**caractérisé en ce qu'**il comporte en outre une boucle passive reliée au câble et traversant le tore magnétique.

2. Équipement selon la revendication 1, **caractérisé en ce que** la boucle passive est reliée, d'une part, au câble d'alimentation et, d'autre part, à la masse.

3. Équipement selon l'une des revendications 1 et 2,
**caractérisé en ce que** la boucle passive comporte une première capacité (C1) et une seconde capacité (C2), agencées de part et d'autre du tore magnétique.

4. Équipement selon la revendication 3, prise en combinaison avec la revendication 2, **caractérisé en ce que** la première capacité (C1) est reliée au câble d'alimentation, tandis que la seconde capacité (C2) est reliée à la masse.

5. Équipement selon l'une des revendications précédentes,
**caractérisé en ce qu'**il comporte en outre un témoin indicatif mis en parallèle avec la boucle passive.

6. Équipement selon la revendication 5, prise en combinaison avec l'une des revendications 3 et 4,
**caractérisé en ce que** le témoin indicatif est mis en parallèle avec la seconde capacité (C2).

7. Équipement selon la revendication 6, **caractérisé en ce que** le témoin indicatif est connecté, d'une part, entre le tore magnétique et la seconde capacité (C2) et, d'autre part, à la masse.

8. Équipement selon l'une des revendications 5 à 7,
**caractérisé en ce que** le témoin indicatif est un témoin lumineux.

9. Équipement selon l'une des revendications précédentes,
**caractérisé en ce que** le câble d'alimentation est coaxial au moins entre sa connexion à la boucle passive et sa connexion au modem.

10. Équipement selon l'une des revendications précédentes,
**caractérisé en ce que** le câble d'alimentation est entouré d'une tresse reliée à la terre au moins entre sa connexion à la boucle passive et sa connexion au modem.

11. Équipement selon l'une des revendications précédentes,
**caractérisé en ce qu'**il est destiné à être intégré au sein d'une cellule de haute tension d'alimentation (HTA).

12. Utilisation de l'équipement selon l'une des revendications précédentes, à l'interconnexion entre :
- un modem opérant à une tension voisine de 230V,
- et un câble d'alimentation connecté à un réseau de distribution électrique de haute tension, sensiblement comprise entre 10kV et 20kV.

13. Utilisation selon la revendication 12, pour de la communication par courants porteurs en ligne, avec une onde de puissance à une fréquence voisine de 50Hz, et des surmodulations à des fréquences sensiblement comprises entre 1 et 30 MHz pour de la communication à hauts débits.
